# EUROPEAN PATENT SPECIFICATION

(11) **EP 2 676 465 B1**
(45) Date of publication and mention of the grant of the patent: **10.05.2017**
(21) Application number: 11703674.9
(22) Date of filing: 14.02.2011
(51) Int. Cl.: H04W 16/14, H04W 24/08, H04W 72/08, H04W 8/26

(54) **SECONDARY SPECTRUM USE**
SEKUNDÄRE VERWENDUNG EINES SPEKTRUMS
UTILISATION D'UN SPECTRE SECONDAIRE

(43) Date of publication of application: 25.12.2013
(73) Proprietor: Nokia Solutions and Networks Oy, 02610 Espoo (FI)
(72) Inventor: VAN PHAN, Vinh, FIN-90100 Oulu (FI); TURTINEN, Samuli, FIN-90580 Oulu (FI); HAKOLA, Sami, FIN-90450 Kempele (FI); KOSKELA, Timo, FIN-90120 Oulu (FI)
(74) Representative: Nokia Corporation
(86) International application number: PCT/EP2011/052127
(87) International publication number: WO 2012/110076

(56) References cited:
- EP-A1- 2 214 445
- WO-A2-2007/031956
- US-A1- 2009 149 208
- CHIA-HAN LEE ET AL: "Multiple Access-Inspired Cooperative Spectrum Sensing for Cognitive Radio", MILITARY COMMUNICATIONS CONFERENCE, 2007. MILCOM 2007. IEEE, IEEE, PISCATAWAY, NJ, USA, 29 October 2007 (2007-10-29), pages 1-6, XP031232378, ISBN: 978-1-4244-1512-0

## Description

### Field

The invention relates to secondary spectrum use, in particular to an apparatus, a method and a computer program.

### Background

US 2009/0149208 A1 relates to wireless networks and looks at spectrum sensing for detecting primary users and avoiding interference. When spectrum sensing, users will collaborate amongst themselves, wherein a subset of the users will sense the same frequency band at the same time and will report the results to a central node, which in turn will make a decision on the availability of free spectrum in the different frequency bands.

WO 2007/031956 A2 relates to wireless communications and provides a mechanism for assigning measurements to be made and then reporting the measurements in wireless networks that function in restricted frequency bands.

Recently need for more efficient usage of radio resources has brought out an idea of co-existence or sharing of systems meaning that systems share operational resources, for example spectrum in a given region.

### Brief description

According to an aspect of the present invention, there is provided an apparatus comprising: at least one processor and at least one memory including a computer program code, wherein the at least one memory and the computer program code is configured to, with the at least one processor, cause the apparatus at least to: configure a user device group for monitoring resource usage in a specified area and allocate user-device group-specific random access channel resources for informing on resource usage; convey a monitoring request to at least one user device based on the user device group configuration; obtain monitoring results from at least one of the user devices in the user device group by using the group-specifically allocated random access channel resources, and process the monitoring results for determining resource usage status in the specified area.

According to another aspect of the present invention, there is provided a method comprising: configuring a user device group for monitoring resource usage in a specified area and allocate user-device group-specific random access channel resources for informing on resource usage; conveying a monitoring request to at least one user device based on the user device group configuration; obtaining monitoring results from at least one of the user devices in the user device group by using the group-specifically allocated random access channel resources, and processing the monitoring results for determining resource usage status in the specified area.

According to yet another aspect of the present invention, there is provided a computer program comprising program code configured for executing a process, the process comprising: configuring a user device group for monitoring resource usage in a specified area and allocate user-device group-specific random access channel resources for informing on resource usage; conveying a monitoring request to at least one user device based on the user device group configuration; obtaining monitoring results from at least one of the user devices in the user device group by using the group-specifically allocated random access channel resources, and processing the monitoring results for determining resource usage status in the specified area.

### List of drawings

Embodiments of the present invention are described below, by way of example only, with reference to the accompanying drawings, in which
Figure 1 illustrates an example of a system;
Figure 2 is a flow chart;
Figure 3 shows an example of an apparatus.

### Description of embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments are applicable to any user device, such as a user terminal, relay node, server, node, corresponding component, and/or to any communication system or any combination of different communication systems that support required functionalities. The communication system may be a wireless communication system or a communication system utilizing both fixed networks and wireless networks. The protocols used, the specifications of communication systems, apparatuses, such as servers and user terminals, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on LTE Advanced, LTE-A, that is based on orthogonal frequency multiplexed access (OFDMA) in a downlink and a single-carrier frequency-division multiple access (SC-FDMA) in an uplink, without restricting the embodiments to such an architecture, however. It is obvious for a person skilled in the art that the embodiments may also be applied to other kinds of communications networks having suitable means by adjusting parameters and procedures appropriately. For example, the embodiments are applicable to both frequency division duplex (FDD) and time division duplex (TDD).

In an orthogonal frequency division multiplexing (OFDM) system, the available spectrum is divided into multiple orthogonal sub-carriers. In OFDM systems, available bandwidth is divided into narrower sub-carriers and data is transmitted in parallel streams. Each OFDM symbol is a linear combination of signals on each of the subcarriers. Further, each OFDM symbol is preceded by a cyclic prefix (CP), which is used to decrease Inter-Symbol Interference. Unlike in OFDM, SC-FDMA subcarriers are not independently modulated.

Typically, a (e)NodeB ( "e" stands for advanced evolved) needs to know channel quality of each user device and/or the preferred precoding matrices (and/or other multiple input-multiple output (MIMO) specific feedback information, such as channel quantization) over the allocated subbands to schedule transmissions to user devices. Required information is usually signalled to the (e)NodeB.

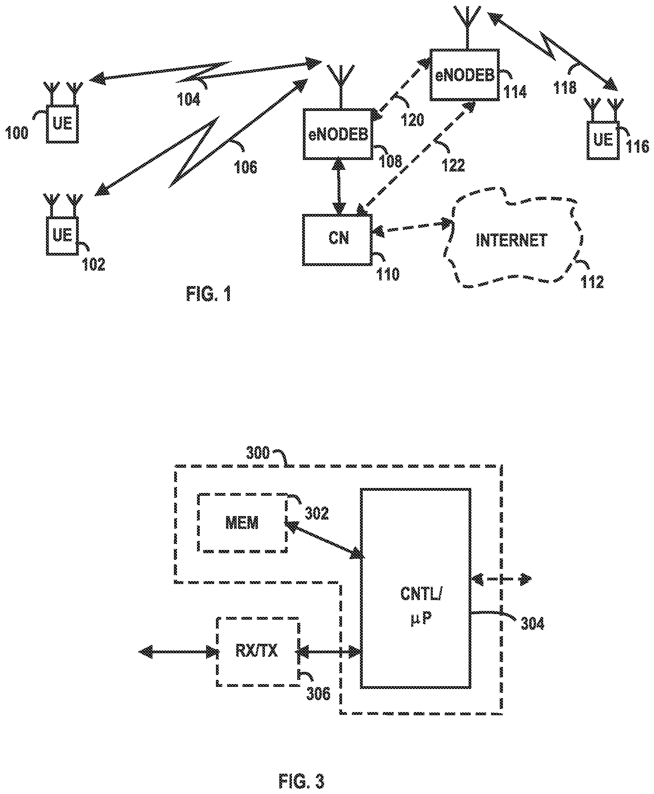

Figure 1 depicts an example of a simplified system architecture only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.
The embodiments are not, however, restricted to the system given as an example but a person skilled in the art may apply the solution to other communication systems provided with the necessary properties. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS).

Figure 1 shows a part of a radio access network of E-UTRA, LTE, LTE-Advanced (LTE-A) or LTE/EPC (EPC = evolved packet core, EPC is enhancement of packet switched technology to cope with faster data rates and growth of Internet protocol traffic). E-UTRA is an air interface of Release 8 (UTRA= UMTS terrestrial radio access, UMTS= universal mobile telecommunications system). Some advantages obtainable by LTE (or E-UTRA) are a possibility to use plug and play devices, and Frequency Division Duplex (FDD) and Time Division Duplex (TDD) in the same platform.

Figure 1 shows user devices 100 and 102 configured to be in a wireless connection on one or more communication channels 104, 106 in a cell with a (e)NodeB 108 providing the cell. The physical link from a user device to a (e)NodeB is called uplink or reverse link and the physical link from the NodeB to the user device is called downlink or forward link.

The NodeB, or advanced evolved node B (eNodeB, eNB) in LTE-Advanced, is a computing device configured to control the radio resources of communication system it is coupled to. The (e)NodeB may also be referred to a base station, an access point or any other type of interfacing device including a relay station capable of operating in a wireless environment.

The (e)NodeB includes transceivers, for instance. From the transceivers of the (e) NodeB, a connection is provided to an antenna unit that establishes bi-directional radio links to user devices. The antenna unit may comprise a plurality of antennas or antenna elements. The (e)NodeB is further connected to core network 110 (CN). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

A communications system typically comprises more than one (e)NodeB in which case the (e)NodeBs may also be configured to communicate with one another over links, wired or wireless, designed for the purpose. These links may be used for signalling purposes.
The communication system is typically also able to communicate with other networks, such as a public switched telephone network or the Internet 112.

The user device (also called UE, user equipment, user terminal, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.
The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device.
The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

It should be understood that, in Figure 1, user devices are depicted to include 2 antennas only for the sake of clarity. The number of reception and/or transmission antennas may naturally vary according to a current implementation.

Further, although the apparatuses have been depicted as single entities, different units, processors and/or memory units (not all shown in Figure 1) may be implemented.
It is obvious for a person skilled in the art that the depicted system is only an example of a part of a radio access system and in practise, the system may comprise a plurality of (e)NodeBs, the user device may have an access to a plurality of radio cells and the system may comprise also other apparatuses, such as physical layer relay nodes or other network elements, etc. At least one of the NodeBs or eNodeBs may be a Home(e)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometres, or smaller cells such as micro-, femto-or picocells. The (e)NodeB 108 of Figure 1 may provide any kind of these cells. A cellular radio system may be implemented as a multilayer network including several kinds of cells. Typically, in multilayer networks, one node B provides one kind of a cell or cells, and thus a plurality of node Bs are required to provide such a network structure.
In Figure 1, node (e)NodeB 114 may be a Home(e)Node or pico or femto node. It is operably coupled 120 to the (e)NodeB 108 which may provide a macro cell or a primary communication system cell. User device 116 depicts a user device communicating with the (e)NodeB via a radio link 118. The (e)NodeB may be coupled to the core network 110 directly 122 or indirectly via another network node.
Recently for fulfilling the need for improving the deployment and performance of communication systems, concept of "plug-and-play" node (e)Bs has been introduced. Typically, a network which is able to use "plug-and-play" node (e)Bs, includes, in addition to Home node (e)Bs (Home(e)nodeBs), a home node B gateway, or HNB-GW (not shown in Figure 1). A HNB Gateway (HNB-GW), which is typically installed within an operator's network aggregates traffic from a large number of HNBs back to a core network through Iu-cs and Iu-ps interfaces.
In most countries, a part of a spectrum is reserved for military use, public safety and/or commercial services. The spectrum which only licensees are allowed to use, is usually called licensed spectrum. This spectrum is seen to run short in the future and new approaches are being sought for finding means for improving spectrum usage. This has inspired discussion about shared-spectrum usage for example of so-called unlicensed spectrum, such as TV, satellite and/or industrial, scientific and medical (ISM) frequency bands. The ISM frequency bands are reserved for radio-frequency process heating, microwave ovens, and medical diathermy machines, for example.

The usage of these bands typically requires detecting whether a resource previously declared as available is truly unoccupied within a desired period of time.
Cognitive and re-configurable radios may be a key for obtaining a heterogeneous communication environment where mitigation techniques and cognitive signalling are used for co-existence and/or sharing the spectrum and routing information.
Cognitive radios are designed to efficient spectrum use deploying so-called smart wireless devices being capable to sense and detect the environment and adapt to it thus being suitable for opportunistic spectrum usage, in which also the frequency bands not being used by their primary (usually licensed) users may be utilized by secondary users. For this purpose cognitive radios are designed to detect unused spectrum, such as spectrum holes.
Sensing and/or detecting the environment may require a lot of resources especially in the case of at least relatively large geographical area (for instance, a cell's coverage area can be quite large). If a sufficient number of individual user devices are requested to make measurements and report them to a network, it may be inflexible and resource-consuming, resulting in a notable protocol overhead and delay.

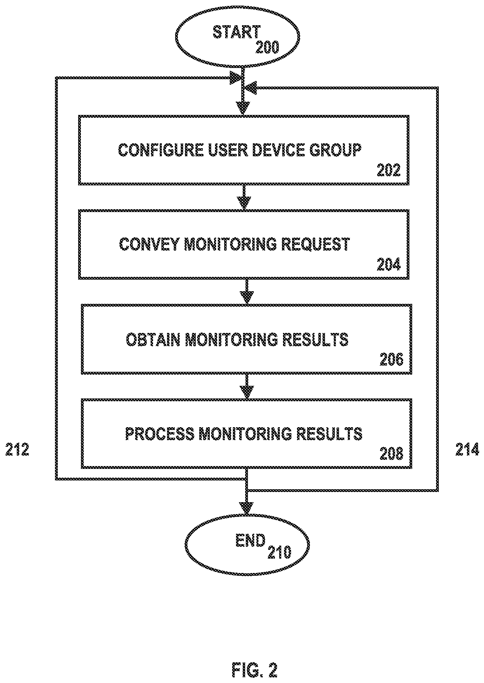

In the following, some embodiments of a method for enabling secondary spectrum use are explained in further detail by means of Figure 2. The embodiments are especially suitable for coarse-sensing on shared bands which in turn enables systems to take advantage of off-loading and/or extending their carrier aggregation by using suitable shared bands. In an embodiment, monitoring information is feedbacked by using group-specifically allocated random access channel (RACH) resources. The coarse-sensing may herein mean an advanced user device measurement-based fast information gathering and exchanging method. In theory, an optimal solution can be achieved as a trade-off between the area of a "sensing map", and the number of devices involved and signaling overhead.

One embodiment starts in block 200.

In block 202, a user device group is configured for monitoring resource usage in a specified area and user-device group-specific random access channel resources are allocated for informing on resource usage.

Monitoring may herein mean coarse-sensing or sensing in general.

In order that a "sensing map" (a region where network is sensed and/or detected) of a sufficient size can be formed and/or controlled, a node apparatus may select user devices which are active, have required capabilities (e.g. are suitable for sensing) and are located at a suitable distance from each other (user devices are suitably sparsely located) thus covering a selected region. The location information may be obtained from timing advance parameters and/or position information, such as information from the global positioning system (GPS). Information on discontinuous reception configuration may be used for determining active user devices.

Several options exist for group identification. One example is using an exclusive set of radio network temporary identifiers (RNTIs) for allocation (and/or reallocation) of selected user devices. When a user device receives an RNTI from this group, it knows that it belongs to a user device group established for monitoring resource usage.

Another option is to use a selective RNTI range. Here again, when a user device receives an RNTI from this group, it knows that it belongs to a user device group established for monitoring resource usage.

In these options, a node and user device may use common signaling, for example on a broadcast channel (BCH), for mutual data conveyance purposes.

Yet another option is the usage of a unique group of RNTIs which may be signaled via a user device-specific dedicated radio resource control (RRC) message. The sensing may be controlled by using a regular downlink packet data control channel (PDCCH) allocation addressed by the group RNTI.

Yet another option is "mass sensing", wherein all available and capable active user devices in an area of interest form a sensing group. A broadcast channel may be used for mutual data conveyance purposes between network and user devices.

A node may allocate random access channel resources for this feedback information, for example random access preambles may be dedicated for this purpose. Resource allocation and/or configuration may be semi-static or dynamically updatable with a monitoring (sensing) request. The resources are allocated user device group-specifically, in which case user devices belonging to the same monitoring group use same resources, such as random access channel, for conveying feedback information.

It should be appreciated that when a group-specific resource allocation is used, it is possible to allocate resources in advance of the actual need, not when a user device requests resources. This enables a quicker response (thus less delay) to the need of obtaining monitoring (sensing) information.

In block 204, a monitoring request is conveyed to at least one user device based on the user device group configuration.

The monitoring request may also include information on group configuration.

According to one alternative, a common sensing or monitoring request may be broadcasted for example on a broadcast channel which is mapped onto a physical downlink shared channel (PDSCH). The request may include information on desired channels to be sensed, threshold to be associated to different spectrum occupancy levels, such as a two-level simple example: channel is free or busy, and/or what resources are allocated to feedback monitoring results to a network. As its simpliest, the request may include one bit indicating a command to start sensing action. This alternative is best suited to the case an exclusive set of radio network temporary identifiers (RNTIs) or a selective RNTI range is used.

Another option is better suited to be used with a group RNTI. In this option, a common sensing or monitoring request may be addressed to chosen user devices using regular scheduling on a PDCCH and PDSCH. New radio resource control signaling procedures targeted to convey information on coarse sensing configuration and a request itself may be needed. These signaling procedures may be implemented by adding sufficient number of bits to existing messages or they may be separate messages conveyed by normal signaling channels. The sufficient number of bits depends on the complexity of information, for example an initiating message may only include one bit. In some cases, however, existing signaling is enough, such as for conveying an RNTI. Additionally, for a quicker sending of a short request (for example one bit) without an exhaustive updating of sensing configuration (or allocation), a new medium access control (MAC)-C packet data unit (PDU) may be introduced. The short request may be transmitted as a MAC-C PDU with only a header, where the field length may be omitted and replaced with a sensing initiation command. The MAC-C PDU may also be used for conveying group configuration information. For example, a node may transmit an RNTI in the header of a medium access control (MAC)-C packet data unit (PDU).

Yet another option is based on extending user device measurements and reporting. In this option, a radio resource control procedure of active user devices is extended in a manner that a dedicated radio resource control sensing request (only an initiating command or an initiating command added with configuration information) may be conveyed to individual selected user devices inside the monitoring group. Monitoring (or sensing) feedback is conveyed to a network using monitoring group-wise allocated random access channel (RACH) resources.

In block 206, monitoring results are obtained from at least one of the user devices in the user device group by using the group-specifically allocated random access channel resources.

The monitoring results may be obtained by receiving feedback from one or more user devices. Resource allocation and/or configuration may be semi-static or dynamically updatable with a monitoring (sensing) request. The resources are allocatedgroup-specifically, when user devices belonging to the same monitoring group use same resources, such as random access channel, for conveying feedback information.

The monitoring information feedback may include status information, such as busy or free, or load information, such as under-load, moderate load, or overload.

In one option, a preamble depicting a status or load information used in configuring and/or in a request is also used in feedback information.

In block 208, the monitoring results are processed for determining resource usage status in the specified area.

A node, after receiving the monitoring results, may estimate the number of user devices that actually have sent the information. The estimation may be based on total received signal energy or signal strength of suitable messages, such as certain preambles, from user devices in a monitoring group of interest, etc. At least one estimate is performed and it may be taken into account when determining an overall status of a band to be possibly shared. The determining may for instance be averaging. The determined status may be used in decision making whether a "band candidate" is suitable for shared use.

The embodiment ends in block 210. The embodiment is repeatable in many ways. Figure 1 shows 2 examples: arrow 212 illustrates the possibility to repeat the embodiment by conveying a new monitoring request to a previously configured group for updating a possibly changed resource usage status in the area of interest, and arrow 214 illustrates how the embodiment may be repeated starting from configuring user device groups. Other possibilities exist as well.
The steps/points, signaling messages and related functions described above in Figure 2 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point.
It should be understood that transmitting and/or receiving may herein mean preparing a transmission and/or reception, preparing a message to be transmitted and/or received, or physical transmission and/or reception itself, etc on a case by case basis. In an embodiment, a server, node or host may convey information on the defined primary system communication resources to be protected to network elements involved by transmitting and in one other embodiment, it may receive that information. Additionally, conveying information may mean initiation of a message or a part of a message, or physical conveying, such as transmission, etc. depending on current application.
An embodiment provides an apparatus which may be any node device, host, server or any other suitable apparatus able to carry out processes described above in relation to Figure 2. Figure 3 illustrates a simplified block diagram of an apparatus according to an embodiment especially suitable for secondary spectrum usage. It should be appreciated that the apparatus may also include other units or parts than those depicted in Figure 3. Although the apparatus has been depicted as one entity, different modules and memory (one or more) may be implemented in one or more physical or logical entities.

The apparatus 300 may in general include at least one processor, controller or a unit designed for carrying out control functions operably coupled to at least one memory unit and to various interfaces. Further, a memory unit may include volatile and/or non-volatile memory. The memory unit may store computer program code and/or operating systems, information, data, content or the like for the processor to perform operations according to embodiments. Each of the memory units may be a random access memory, hard drive, etc. The memory units may be at least partly removable and/or detachably operationally coupled to the apparatus.

The apparatus may be a software application, or a module, or a unit configured as arithmetic operation, or as a program (including an added or updated software routine), executed by an operation processor. Programs, also called program products or computer programs, including software routines, applets and macros, can be stored in any apparatus-readable data storage medium and they include program instructions to perform particular tasks. Computer programs may be coded by a programming language, which may be a high-level programming language, such as objective-C, C, C++, Java, etc., or a low-level programming language, such as a machine language, or an assembler.

Modifications and configurations required for implementing functionality of an embodiment may be performed as routines, which may be implemented as added or updated software routines, application circuits (ASIC) and/or programmable circuits. Further, software routines may be downloaded into an apparatus. The apparatus, such as a node device, or a corresponding component, element, unit, etc., may be configured as a computer or a microprocessor, such as a single-chip computer element, or as a chipset, including at least a memory for providing storage capacity used for arithmetic operation and an operation processor for executing the arithmetic operation.

As an example of an apparatus according to an embodiment, it is shown an apparatus, such as a node device or network element, including facilities in a control unit 304 (including one or more processors, for example) to carry out functions of embodiments according to Figure 2. This is depicted in Figure 3.

The apparatus may also include at least one processor 304 and at least one memory 302 including a computer program code, the at least one memory and the computer program code configured to, with the at least one processor, cause the apparatus at least to: configure a user device group for monitoring resource usage in a specified area and allocate user-device group-specific random access channel resources for informing on resource usage, convey a monitoring request to at least one user device based on the user device group configuration, obtain monitoring results from at least one of the user devices in the user device group by using the group-specifically allocated random access channel resources, and process the monitoring results for determining resource usage status in the specified area.

Another example of an apparatus comprises means 304 for configuring a user device group for monitoring resource usage in a specified area and allocating user-device group-specific random access channel resources for informing on resource usage, means 304 for conveying a monitoring request to at least one user device based on the user device group configuration, means 304 for obtaining monitoring results from at least one of the user devices in the user device group by using the group-specifically allocated random access channel resources, and means for processing the monitoring results for determining resource usage status in the specified area. Yet another example of an apparatus comprises a grouping unit configured to configure a user device group for monitoring resource usage in a specified area and allocate user-device group-specific random access channel resources for informing on resource usage, a conveying unit configured to convey a monitoring request to at least one user device based on the user device group configuration, an obtainer configured to obtain monitoring results from at least one of the user devices in the user device group by using the group-specifically allocated random access channel resources, and processor configured to process the monitoring results for determining resource usage status in the specified area. Embodiments of Figure 2 may be carried out in a processor or control unit 304 possibly with aid of a memory 302 as well as a transmitter and/or receiver 306.

It should be appreciated that different units may be implemented as one module, unit, processor, etc, or as a combination of several modules, units, processor, etc.

It should be understood that the apparatuses may include other units or modules etc. used in or for transmission and/or reception. However, they are irrelevant to the embodiments and therefore they need not to be discussed in more detail herein. Transmitting/receiving may herein mean transmitting/receiving via antennas to a radio path, carrying out preparations for physical transmissions/recpetions or transmission/reception control depending on the implementation, etc. The apparatus may utilize a transmitter and/or receiver which are not included in the apparatus itself, such as a processor, but are available to it, being operably coupled to the apparatus. This is depicted as an option in Figure 3 as a transceiver 306.
Embodiments provide computer programs embodied on a distribution medium, comprising program instructions which, when loaded into electronic apparatuses, constitute the apparatuses as explained above.
Other embodiments provide computer programs embodied on a computer readable medium, configured to control a processor to perform embodiments of the methods described above.
The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or it may be distributed amongst a number of computers.
The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g., procedures, functions, and so on) that perform the functions described herein. The software codes may be stored in a memory unit and executed by processors. The memory unit may be implemented within the processor or externally to the processor. In the latter case it can be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.
It will be obvious to a person skilled in the art that, as technology advances, the inventive concept may be implemented in various ways. The invention and its embodiments are not limited to the examples described above but may vary within the scope of the claims.

## Claims

1. An apparatus (300) comprising:
at least one processor (304) and at least one memory (302) including a computer program code, wherein the at least one memory and the computer program code is configured to, with the at least one processor (304), cause the apparatus at least to:
configure (202) a user device group for monitoring resource usage in a specified area and allocate user-device group-specific random access channel resources for informing on the resource usage;
convey (204) a monitoring request to at least one user device based on the user device group configuration;
obtain (206) monitoring results from at least one of the user devices in the user device group by using the group-specifically allocated random access channel resources, and
process (208) the monitoring results for determining resource usage status in the specified area.

2. The apparatus (300) of claim 1, wherein the monitoring is coarse-sensing or sensing in general.

3. The apparatus (300) of any preceding claim, wherein the user device group comprises user devices which are active, have the required capabilities for monitoring and are located at a distance from each other such that the specified area is covered.

4. The apparatus (300) of any preceding claim, wherein configuring the user device group comprises determining group identification by using at least one of the following: an exclusive set of radio network temporary identifiers, a selective radio network temporary identifier range, and a unique group of radio network temporary identifiers.

5. The apparatus (300) of any preceding claim, wherein the user device group comprises all available and active user devices having the required capabilities for monitoring in the specified area.

6. The apparatus (300) of any preceding claim, wherein the monitoring request is conveyed by using at least one of the following:
a broadcasted common request,
a common request addressed to chosen user devices using a regular scheduling on a downlink packet data control channel and physical downlink shared channel,
and a radio resource control procedure of active user devices comprising a dedicated radio resource control monitoring request.

7. The apparatus (300) of any preceding claim, the apparatus (300) comprising a server, host, node device or a user device.

8. A method comprising:
configuring (202) a user device group for monitoring resource usage in a specified area and allocate user-device group-specific random access channel resources for informing on the resource usage;
conveying (204) a monitoring request to at least one user device based on the user device group configuration;
obtaining (206) monitoring results from at least one of the user devices in the user device group by using the group-specifically allocated random access channel resources, and
processing (208) the monitoring results for determining resource usage status in the specified area.

9. The method of claim 8, wherein configuring (202) the user device group comprises determining group identification by using at least one of the following: an exclusive set of radio network temporary identifiers, a selective radio network temporary identifier range, and a unique group of radio network temporary identifiers.

10. The method of any preceding claim 8 to 9, wherein the monitoring request is conveyed by using at least one of the following:
a broadcasted common request,
a common request addressed to chosen user devices using a regular scheduling on a downlink packet data control channel and physical downlink shared channel,
and a radio resource control procedure of active user devices comprising a dedicated radio resource control monitoring request.

11. A computer program comprising program code configured for executing a process, the process comprising:
configuring (202) a user device group for monitoring resource usage in a specified area and allocate user-device group-specific random access channel resources for informing on the resource usage;
conveying (204) a monitoring request to at least one user device based on the user device group configuration;
obtaining (206) monitoring results from at least one of the user devices in the user device group by using the group-specifically allocated random access channel resources, and
processing (208) the monitoring results for determining resource usage status in the specified area.

12. The computer program of claim 11, wherein the user device group comprises user devices which are active, have the required capabilities for monitoring and are located at a distance from each other such that the specified area is covered.

13. The computer program of claim 11 or 12, wherein configuring the user device group comprises determining group identification by using at least one of the following: an exclusive set of radio network temporary identifiers, a selective radio network temporary identifier range, and a unique group of radio network temporary identifiers.

14. The computer program of any preceding claim 11 to 13, wherein the user device group comprises all available and active user devices having the required capabilities for monitoring in the specified area.

15. The computer program of any preceding claim 11 to 14, wherein the monitoring request is conveyed by using at least one of the following:
a broadcasted common request,
a common request addressed to chosen user devices using a regular scheduling on a downlink packet data control channel and physical downlink shared channel,
and a radio resource control procedure of active user devices comprising a dedicated radio resource control monitoring request.

## Patentansprüche

1. Vorrichtung (300), die Folgendes umfasst:
mindestens einen Prozessor (304) und mindestens einen Speicher (302), der Computerprogrammcode enthält, wobei der mindestens eine Speicher und der Computerprogrammcode konfiguriert sind, zusammen mit dem mindestens einen Prozessor (304) zu bewirken, dass die Vorrichtung zumindest:
eine Anwendervorrichtungsgruppe zum Überwachen einer Betriebsmittelverwendung in einem bestimmten Bereich konfiguriert (202) und anwendervorrichtungsgruppenspezifische Zufallszugriffskanalbetriebsmittel zum Informieren über die Betriebsmittelverwendung zuteilt;
eine Überwachungsanforderung an mindestens eine Anwendervorrichtung anhand der Anwendervorrichtungsgruppenkonfiguration übermittelt (204) ;
Überwachungsergebnisse von mindestens einer der Anwendervorrichtungen in der Anwendervorrichtungsgruppe durch Verwenden der gruppenspezifischen zugeteilten Zufallszugriffskanalbetriebsmittel erhält (206) und
die Überwachungsergebnisse zum Bestimmen eines Betriebsmittelverwendungszustands in dem bestimmten Bereich verarbeitet (208).

2. Vorrichtung (300) nach Anspruch 1, wobei das Überwachen Groberfassen oder Erfassen im Allgemeinen ist.

3. Vorrichtung (300) nach einem vorhergehenden Anspruch, wobei die Anwendervorrichtungsgruppe Anwendervorrichtungen umfasst, die aktiv sind, die erforderlichen Fähigkeiten zum Überwachen besitzen und sich so in einem Abstand voneinander befinden, dass der bestimmte Bereich abgedeckt ist.

4. Vorrichtung (300) nach einem vorhergehenden Anspruch, wobei das Konfigurieren der Anwendervorrichtungsgruppe umfasst, eine Gruppenidentifikation durch Verwenden mindestens eines des Folgenden zu bestimmen: einer exklusiven Gruppe von vorläufigen Funknetzkennungen, eines ausgewählten vorläufigen Funknetzkennungsbereichs und einer eindeutigen Gruppe von vorläufigen Funknetzkennungen.

5. Vorrichtung (300) nach einem vorhergehenden Anspruch, wobei die Anwendervorrichtungsgruppe alle verfügbaren und aktiven Anwendervorrichtungen mit den erforderlichen Fähigkeiten zum Überwachen in dem bestimmten Bereich umfasst.

6. Vorrichtung (300) nach einem vorhergehenden Anspruch, wobei die Überwachungsanforderung durch Verwenden mindestens eines des Folgenden übermittelt wird:
einer gesendeten gemeinsamen Anforderung,
einer gemeinsamen Anforderung, die an ausgewählte Anwendervorrichtungen adressiert ist, die eine reguläre Planung auf einem Abwärtsstreckenpaketdatensteuerkanal und einem physikalischen gemeinsam genutzten Abwärtsstreckenkanal verwenden,
und einer Funkbetriebsmittelsteuerprozedur von aktiven Anwendervorrichtungen, die eine dedizierte Funkbetriebsmittelsteuerüberwachungsanforderung umfasst.

7. Vorrichtung (300) nach einem vorhergehenden Anspruch, wobei die Vorrichtung (300) einen Server, einen Host, eine Knotenvorrichtung oder eine Anwendervorrichtung umfasst.

8. Verfahren, das Folgendes umfasst:
Konfigurieren (202) einer Anwendervorrichtungsgruppe zum Überwachen einer Betriebsmittelverwendung in einem bestimmten Bereich und Zuteilen von anwendervorrichtungsgruppenspezifischen Zufallszugriffskanalbetriebsmitteln zum Informieren über die Betriebsmittelverwendung;
Übermitteln (204) einer Überwachungsanforderung an mindestens eine Anwendervorrichtung anhand der Anwendervorrichtungsgruppenkonfiguration;
Erhalten (206) von Überwachungsergebnissen von mindestens einer der Anwendervorrichtungen in der Anwendervorrichtungsgruppe durch Verwenden der gruppenspezifischen zugeteilten Zufallszugriffskanalbetriebsmittel und
Verarbeiten (208) der Überwachungsergebnisse zum Bestimmen eines Betriebsmittelverwendungszustands in dem bestimmten Bereich.

9. Verfahren nach Anspruch 8, wobei das Konfigurieren (202) der Anwendervorrichtungsgruppe umfasst, eine Gruppenidentifikation durch Verwenden mindestens eines des Folgenden zu bestimmen: einer exklusiven Gruppe von vorläufigen Funknetzkennungen, eines ausgewählten vorläufigen Funknetzkennungsbereichs und einer eindeutigen Gruppe von vorläufigen Funknetzkennungen.

10. Verfahren nach einem vorhergehenden Anspruch 8 bis 9, wobei die Überwachungsanforderung durch Verwenden mindestens eines des Folgenden übermittelt wird:
einer gesendeten gemeinsamen Anforderung,
einer gemeinsamen Anforderung, die an ausgewählte Anwendervorrichtungen adressiert ist, die eine reguläre Planung auf einem Abwärtsstreckenpaketdatensteuerkanal und einem physikalischen gemeinsam genutzten Abwärtsstreckenkanal verwenden,
und einer Funkbetriebsmittelsteuerprozedur von aktiven Anwendervorrichtungen, die eine dedizierte Funkbetriebsmittelsteuerüberwachungsanforderung umfassen.

11. Computerprogrammprodukt, das Computerprogrammcode enthält, der konfiguriert ist, einen Prozess auszuführen, wobei der Prozess Folgendes umfasst:
Konfigurieren (202) einer Anwendervorrichtungsgruppe zum Überwachen einer Betriebsmittelverwendung in einem bestimmten Bereich und Zuteilen von anwendervorrichtungsgruppenspezifischen Zufallszugriffskanalbetriebsmitteln zum Informieren über die Betriebsmittelverwendung;
Übermitteln (204) einer Überwachungsanforderung an mindestens eine Anwendervorrichtung anhand der Anwendervorrichtungsgruppenkonfiguration;
Erhalten (206) von Überwachungsergebnissen von mindestens einer der Anwendervorrichtungen in der Anwendervorrichtungsgruppe durch Verwenden der gruppenspezifischen zugeteilten Zufallszugriffskanalbetriebsmittel und
Verarbeiten (208) der Überwachungsergebnisse zum Bestimmen eines Betriebsmittelverwendungszustands in dem bestimmten Bereich.

12. Computerprogramm nach Anspruch 11, wobei die Anwendervorrichtungsgruppe Anwendervorrichtungen umfasst, die aktiv sind, die erforderlichen Fähigkeiten zum Überwachen besitzen und sich in einem Abstand voneinander befinden, derart, dass der bestimmte Bereich abgedeckt ist.

13. Computerprogramm nach Anspruch 11 oder 12, wobei das Konfigurieren der Anwendervorrichtungsgruppe umfasst, eine Gruppenidentifikation durch Verwenden mindestens eines des Folgenden zu bestimmen: einer exklusiven Gruppe von vorläufigen Funknetzkennungen, eines ausgewählten vorläufigen Funknetzkennungsbereichs und einer eindeutigen Gruppe von vorläufigen Funknetzkennungen.

14. Computerprogramm nach einem vorhergehenden Anspruch 11 bis 13, wobei die Anwendervorrichtungsgruppe alle verfügbaren und aktiven Anwendervorrichtungen mit den erforderlichen Fähigkeiten zum Überwachen in dem bestimmten Bereich umfasst.

15. Computerprogramm nach einem vorhergehenden Anspruch 11 bis 14, wobei die Überwachungsanforderung durch Verwenden mindestens eines des Folgenden übermittelt wird:
einer gesendeten gemeinsamen Anforderung,
einer gemeinsamen Anforderung, die an ausgewählte Anwendervorrichtungen adressiert ist, die eine reguläre Planung auf einem Abwärtsstreckenpaketdatensteuerkanal und einem physikalischen gemeinsam genutzten Abwärtsstreckenkanal verwenden,
und einer Funkbetriebsmittelsteuerprozedur von aktiven Anwendervorrichtungen, die eine dedizierte Funkbetriebsmittelsteuerüberwachungsanforderung umfasst.

## Revendications

1. Appareil (300), comprenant :
au moins un processeur (304) et au moins une mémoire (302) comportant un code de programme d'ordinateur, l'au moins une mémoire et le code de programme d'ordinateur étant configurés pour, au moyen de l'au moins un processeur (304), amener l'appareil au moins à :
configurer (202) un groupe de dispositifs utilisateurs pour surveiller une utilisation de ressources dans une zone spécifiée et allouer des ressources de canal d'accès aléatoire spécifiques au groupe de dispositifs utilisateurs pour notifier l'utilisation de ressources ;
acheminer (204) une demande de surveillance vers au moins un dispositif utilisateur en fonction de la configuration du groupe de dispositifs utilisateurs ;
obtenir (206) des résultats de surveillance auprès d'au moins un des dispositifs utilisateurs dans le groupe de dispositifs utilisateurs à l'aide des ressources de canal d'accès aléatoire allouées spécifiquement au groupe, et
traiter (208) les résultats de surveillance pour déterminer un état d'utilisation de ressources dans la zone spécifiée.

2. Appareil (300) selon la revendication 1, dans lequel la surveillance prend la forme d'un captage grossier ou d'un captage général.

3. Appareil (300) selon l'une quelconque des revendications précédentes, dans lequel le groupe de dispositifs utilisateurs comprend des dispositifs utilisateurs qui sont actifs, disposent des capacités requises pour surveiller et se situent à une certaine distance les uns des autres de façon à couvrir la zone spécifiée.

4. Appareil (300) selon l'une quelconque des revendications précédentes, dans lequel la configuration du groupe de dispositifs utilisateurs comprend la détermination d'une identification de groupe à l'aide d'au moins un des éléments suivants : un jeu exclusif d'identifiants temporaires de réseau radio, une plage sélective d'identifiants temporaires de réseau radio et un groupe unique d'identifiants temporaires de réseau radio.

5. Appareil (300) selon l'une quelconque des revendications précédentes, dans lequel le groupe de dispositifs utilisateurs comprend tous les dispositifs utilisateurs disponibles et actifs disposant des capacités requises pour surveiller dans la zone spécifiée.

6. Appareil (300) selon l'une quelconque des revendications précédentes, dans lequel la demande de surveillance est acheminée à l'aide d'au moins un des éléments suivantes :
une demande commune à diffusion large,
une demande commune adressée à des dispositifs utilisateurs choisis à l'aide d'un ordonnancement ordinaire sur un canal de commande de données en mode paquet dans le sens descendant et un canal physique partagé dans le sens descendant,
et une procédure de commande de ressources radio de dispositifs utilisateurs actifs comprenant une demande de surveillance de commande de ressources radio dédiée.

7. Appareil (300) selon l'une quelconque des revendications précédentes, l'appareil (300) comprenant un serveur, un hôte, un dispositif noeud ou un dispositif utilisateur.

8. Procédé, comprenant :
la configuration (202) d'un groupe de dispositifs utilisateurs pour surveiller une utilisation de ressources dans une zone spécifiée et allouer des ressources de canal d'accès aléatoire spécifiques au groupe de dispositifs utilisateurs pour notifier l'utilisation de ressources ;
l'acheminement (204) d'une demande de surveillance vers au moins un dispositif utilisateur en fonction de la configuration du groupe de dispositifs utilisateurs ;
l'obtention (206) de résultats de surveillance auprès d'au moins un des dispositifs utilisateurs dans le groupe de dispositifs utilisateurs à l'aide des ressources de canal d'accès aléatoire allouées spécifiquement au groupe, et
le traitement (208) des résultats de surveillance pour déterminer un état d'utilisation de ressources dans la zone spécifiée.

9. Procédé selon la revendication 8, dans lequel la configuration (202) du groupe de dispositifs utilisateurs comprend la détermination d'une identification de groupe à l'aide d'au moins un des éléments suivants : un jeu exclusif d'identifiants temporaires de réseau radio, une plage sélective d'identifiants temporaires de réseau radio et un groupe unique d'identifiants temporaires de réseau radio.

10. Procédé selon l'une quelconque des revendications 8 à 9 précédentes, dans lequel la demande de surveillance est acheminée à l'aide d'au moins un des éléments suivants :
une demande commune à diffusion large,
une demande commune adressée à des dispositifs utilisateurs choisis à l'aide d'un ordonnancement ordinaire sur un canal de commande de données en mode paquet dans le sens descendant et un canal physique partagé dans le sens descendant,
et une procédure de commande de ressources radio de dispositifs utilisateurs actifs comprenant une demande de surveillance de commande de ressources radio dédiée.

11. Programme d'ordinateur comprenant un code de programme configuré pour exécuter un processus, le processus comprenant :
la configuration (202) d'un groupe de dispositifs utilisateurs pour surveiller une utilisation de ressources dans une zone spécifiée et allouer des ressources de canal d'accès aléatoire spécifiques au groupe de dispositifs utilisateurs pour notifier l'utilisation de ressources ;
l'acheminement (204) d'une demande de surveillance vers au moins un dispositif utilisateur en fonction de la configuration du groupe de dispositifs utilisateurs ;
l'obtention (206) de résultats de surveillance auprès d'au moins un des dispositifs utilisateurs dans le groupe de dispositifs utilisateurs à l'aide des ressources de canal d'accès aléatoire allouées spécifiquement au groupe, et
le traitement (208) des résultats de surveillance pour déterminer un état d'utilisation de ressources dans la zone spécifiée.

12. Programme d'ordinateur selon la revendication 11, dans lequel le groupe de dispositifs utilisateurs comprend des dispositifs utilisateurs qui sont actifs, disposent des capacités requises pour surveiller et se situent à une certaine distance les uns des autres de façon à couvrir la zone spécifiée.

13. Programme d'ordinateur selon la revendication 11 ou 12, dans lequel la configuration du groupe de dispositifs utilisateurs comprend la détermination d'une identification de groupe à l'aide d'au moins un des éléments suivants : un jeu exclusif d'identifiants temporaires de réseau radio, une plage sélective d'identifiants temporaires de réseau radio et un groupe unique d'identifiants temporaires de réseau radio.

14. Programme d'ordinateur selon l'une quelconque des revendications 11 à 13 précédentes, dans lequel le groupe de dispositifs utilisateurs comprend tous les dispositifs utilisateurs disponibles et actifs disposant des capacités requises pour surveiller dans la zone spécifiée.

15. Programme d'ordinateur selon l'une quelconque des revendications 11 à 14 précédentes, dans lequel la demande de surveillance est acheminée à l'aide d'au moins un des éléments suivants :
une demande commune à diffusion large,
une demande commune adressée à des dispositifs utilisateurs choisis à l'aide d'un ordonnancement ordinaire sur un canal de commande de données en mode paquet dans le sens descendant et un canal physique partagé dans le sens descendant,
et une procédure de commande de ressources radio de dispositifs utilisateurs actifs comprenant une demande de surveillance de commande de ressources radio dédiée.
